# EUROPEAN PATENT SPECIFICATION

(11) **EP 0 463 121 B1**
(45) Date of publication and mention of the grant of the patent: **07.09.1994**
(21) Application number: 90911455.5
(22) Date of filing: 14.03.1990
(51) Int. Cl.: B24C 1/00

(54) **PROCESS FOR REMOVING COATINGS FROM SENSITIVE SUBSTRATES, AND BLASTING MEDIA USEFUL THEREIN**
VERFAHREN ZUR ENTFERNUNG VON BESCHICHTUNGEN EMPFINDLICHER SUBSTRATE UND WERFMEDIA DAZU
PROCEDE D'ELIMINATION DE REVETEMENTS SUR DES SUBSTRATS SENSIBLES, ET MILIEUX DE PROJECTION ABRASIFS UTILES DANS LEDIT PROCEDE

(30) Priority: 14.03.1989 US 323412
(43) Date of publication of application: 02.01.1992
(73) Proprietor: Church & Dwight Co., Inc., Princeton, NJ 08540 (US)
(72) Inventor: KIRSCHNER, Lawrence, Flanders, NJ 07836 (US)
(74) Representative: Kooy, Leendert Willem
(86) International application number: US9004203
(87) International publication number: WO9011163

(56) References cited:
- CA-A- 0 532 346
- US-A- 2 710 286
- US-A- 3 933 672
- US-A- 3 963 627
- US-A- 4 174 571
- US-A- 4 251 579
- US-A- 4 446 035
- US-A- 4 652 392
- US-A- 4 731 125
- US-A- 4 804 488
- COMCO INC. "Microblaster", Product brochure, 01 January 1986, Burbank, California, USA

## Description

This invention relates to a process for removing coatings from sensitive metal and composite surfaces or like substrates, and to blasting media useful therein.

### BACKGROUND OF THE INVENTION

It is often desirable to clean or remove coatings from the surfaces of various types of structures and equipment, varying from buildings to industrial devices. Numerous techniques are known for such purposes, ranging from mechanical abrasion techniques to the application of chemicals for cleaning or removing surface coatings such as paint, sealants, lacquers or the like. Hard, durable surfaces, such as granite walls or heavy steel plating may be cleaned or stripped by vigorous abrasive techniques such as sand blasting. More delicate surfaces may require less aggressive treatments to prevent damage to the substrates.

Both commercial airlines and military agencies spend large sums in periodically stripping or abrading paint and other coatings from the exterior surfaces of modern aircraft. These surfaces comprise light weight aluminum or other metal alloys, or composites, which are relatively soft and from which paint or other coatings must be carefully removed to avoid excessive abrasion or chemical damage. Such damage may, in extreme cases, lead to mechanical failure.

Various improved stripping techniques, similar to sand blasting, have been proposed for removing coatings from sensitive metal and composite aircraft or like surfaces. Blasting media useful for such purposes should, preferably, meet the following criteria:
1. They should be relatively non-aggressive (Mohs hardness of about 2.0-3.0);
2. They should be available in various particle size distributions for the treatment of different substrates;
3. They should be free-flowing under high humidity conditions and throughout a broad range of air pressure and media flow rates; and
4. They should be water soluble and non-polluting to facilitate easy separation from the insoluble paints and resins stripped to facilitate waste disposal.

Carr U.S. Patent No. 4,731,125 granted March 15, 1988 describes the use of plastic media for the blast cleaning of sensitive metal and composite surfaces. Such materials are however, relatively expensive, and their use may impose waste disposal problems.

Sodium bicarbonate has also been proposed as a blasting medium for removing coatings from sensitive substrates such as aircraft parts. Bicarbonate is an ideal choice for such a medium since it readily meets criteria 1, 2 and 4 above. Thus, it is relatively non-aggressive (Mohs hardness of about 2.5), is available in a variety of particle sizes, and is both water soluble and commonly utilized to treat sewage treatment facilities for the control of alkalinity and pH. The mild abrasive characteristics of sodium bicarbonate have previously been utilized, for example, in polishing media for teeth. See, for example, U.S. Patents Nos. 3,882,638; 3,972,123; 4,174,571; 4,412,402; 4,214,871; 4,462,803; 4,482,322; 4,487,582; 4,492,575; 4,494,932, and 4,522,597.

In a "Microblaster" product brochure distributed by COMCO Inc. (1986), it is described that sodium bicarbonate having particle sizes ranging from 20 to 150 microns was used as a blasting medium in a dry air stream under a pressure of 861.25 kPa for use in laboratory scale miniature abrasive blasting equipment employed for cleaning and debarring electronic printed circuit boards and the like. The air stream employed in this process muste be dry (i.e. less than 100 ppm moisture), otherwise the sodium bicarbonate will cake.

The fact that sodium bicarbonate has a tendency to cake, either by compaction or, more importantly, by exposure to high humidity conditions is its principal disadvantage.

This is particularly acute in commercial blasting operations, the compressed air streams for which are substantially saturated with moisture, i.e., have 90% or higher relative humidities, and contain oily contaminants from air compressors. In addition, commercially available sodium bicarbonate products have intrinsically poor flow characteristics due to their normal particle size distributions and crystal shapes.

The addition of flow aids to sodium bicarbonate to improve its flow and anti-caking properties is known. Thus, the blending of tricalcium phosphate (TCP) with sodium bicarbonate in baking formulas and dental air jet prophylaxis media has previously been proposed. The addition of such material substantially improves the flow and anti-caking characteristics of the bicarbonate. TCP-treated sodium bicarbonate is however, restricted to a 3 to 6 month shelf life under ambient conditions, since the TCP absorbs moisture until saturated, after which the product cakes.

The particle size of the sodium bicarbonate used in the COMCO Miroblaster is rather small. Such fine particles are, however, not suited for treating all substrates. For some purposes bicarbonate with larger particles, i.e. which have a particle size of 250-500 µm are desired.

It is, accordingly, among the objects of the present invention to provide bicarbonate-containing blasting media wherein the bicarbonate particles have a particle size of 250-500 µm, and a process utilizing such media for removing coatings from sensitive metal and composite surfaces. Bicarbonate blasting media which may be so utilized are free flowing and have long storage lives under adverse commercial blasting conditions, and may be utilized as blasting media at high humidities and under a broad range of finely controlled, high flow rates and air pressures. Other objects and advantages of the invention will be apparent from the following description of preferred forms thereof.

### SUMMARY OF THE INVENTION

In accordance with this invention a process for removing coatings from sensitive metal and composite surfaces is provided, which comprises blasting said surfaces with a compressed air stream under pressures of 68.95-1034.22 kPa (10-150 psi), said stream containing as a blasting medium water-soluble bicarbonate particles selected from the group consisting of alkalimetal and ammonium bicarbonates, which process is characterized in that it is carried out with a compressed air stream that is saturated with moisture, said bicarbonate particles having particle sizes within the range of 250-500 microns, in admixture with at least 0.2% of a hydrophobic silica flow/anti-caking agent, by weight of the bicarbonate.

The particle size is preferably in the range of 250-300 µm, and the amount of silica used is preferably 0.2-3%.

Such hydrophobic silica-containing media exhibit significantly better flow characteristics than comparable media which are either free of flow aids or which contain other conventional flow aids such as TCP or hydrophilic silica. In addition, bicarbonate blasting media incorporating the hydrophobic silica flow aid of the invention have significantly longer, substantially indefinite shelf lives, and exhibit superior resistance to the high relative humidities of commercial compressed air streams.

It is preferred to utilize sodium bicarbonate as the abrasive material in the blasting media of this invention. It is, however, intended that other water-soluble bicarbonates, e.g., alkali metal bicarbonates such as potassium bicarbonate, or ammonium bicarbonate may similarly be employed. Accordingly, while the following description principally refers to the preferred sodium bicarbonate-containing blasting media, it will be understood that the invention embraces blasting media incorporating olther water-soluble bicarbonate abrasives as well.

In US patent 3,963,627 a fire fighting powder composition is described containing hydrophobic silica as a flow additive. The silica is present in an amount of 0.1% to 5%.

Hydrophobic silica has previously been utilized in admixture with hydrophilic silica as a flow aid in polishing media for dental prophylaxis. Such media are applied under conditions which differ dramatically from commercial blasting media. Thus, dental prophylaxis media contain bicarbonate particles having particle sizes of about 65-70 microns, and are applied at rates of about 3 grams per minute through 1.5875-0.7938 mm (1/16-1/32 inch)nozzles under the pressure of clean, laboratory compressed air supplies under pressures of about 344.74-689.48 kPa (50-100 psi). Most important, such air supplies are not substantially saturated with moisture, and present quite different flow and caking problems from those inherent in the application of commercial blasting media at high thruputs in saturated compressed air blast streams.

The blasting media of the invention consist essentially of the water-soluble bicarbonate, e.g., sodium bicarbonate, in admixture with hydrophobic silica particles. Hydrophobic silica, unlike known hydrophilic silicas, is substantially free of non-hydrogen bonded silanol groups and adsorbed water.

One preferred hydrophobic silica which may be utilized in the blasting media hereof is Aerosil R 972, a product which is available from Degussa AG. This material is a pure coagulated silicon dioxide aerosol, in which about 75% of the silanol groups on the surface thereof are chemically reacted with dimethyldichlorosilane, the resulting product having about 0.7 mmol of chemically combined methyl groups per 100m² of surface area and containing about 1% carbon. Its particles vary in diameter between about 10-40 nanometers and have a specific surface area of about 110 m²/gram. It may be prepared by flame hydrolysis of a hydrophilic silica as more fully described in Angew. Chem. 72, 744 (1960); F-PS 1,368,765; and DT-AS 1,163,784. Further details respecting such material are contained in the technical bulletin entitled "Basic Characteristics and Applications of AEROSIL", Degussa AG, August 1986.

The hydrophobic silica particles are admixed with the sodium bicarbonate blasting agent in the proportion of at least about 0.2%, and up to about 3% by weight thereof. The bicarbonate particles may be of any desired particle sizes, within the range of from about 250 to 500 microns. Preferably, when the blasting medium is utilized for the removal of paint from exterior aircraft surfaces, it is preferred to utilize bicarbonate particles having average particle sizes of about 250-300 microns.

Blasting media thus constituted are useful for cleaning or de-coating sensitive metals, e.g., aluminum or aluminum alloys, or composite substrates, such as utilized on exterior aircraft surfaces, without abrading or otherwise damaging the substrates. Composites which can be treated with the blasting media hereof comprise matrices, e.g., epoxy resins, which may contain fibers such as glass strands, graphite or the like for reinforcement.

The blasting medium thus constituted is applied in commercial compressed air streams, i.e., streams which are substantially saturated with moisture (90% or higher relative humidities) and contain oil contaminants from compressors. The bicarbonate/hydrophobic silica blasting medium may be applied at flow rates of about 0.4536-4.536 kg (1-10 pounds) per minute and under air pressures of about 68.95-1034.22 kPa (10-150 psi), from 0.635 cm (1/4 inch) or larger blasting nozzles. As indicated above, and as more fully documented below, in accordance with the present invention it has been found that blasting media so constituted and employed do not cake, have excellent shelf lives, and are free-flowing. They may thus be readily employed in commercial blasting operations for removing coatings from sensitive metal and composite surfaces.

### DETAILED DESCRIPTION OF THE PREFERRED EMBODIMENTS

The following examples illustrate the non caking and free-flowing characteristics of the blasting media of the present invention. In the example, all parts and percentages are given by weight unless otherwise indicated.

### Example 1 - Field Testing of Sodium Bicarbonate - Containing Blasting Media

Two sodium bicarbonate samples, each having an average particle size of about 250-300 microns, and one in admixture with 0.5% Aerosil R-972 hydrophobic silica, were used as media in a standard sand blasting apparatus. The apparatus was a Schmidt Accustrip System, manufactured by Schmidt Manufacturing, Inc. of Houston, Texas, having a 1.27 cm (0.5 inch) nozzle diameter and a Thompson valve connected to a 183 cm³ (6 cubic foot) blast pot and an 800 cfm compressor. The blast pot was mounted on a scale so that media flow rates could be determined.

The respective bicarbonate formulations were blasted through the nozzle at 413.69 gauge (60 psig) pressure utilizing ambient compressed air which was saturated with moisture as it passed through the blasting media in the blast pot.

The sodium bicarbonate particles absent the hydrophobic silica flow aid flowed intermittently through the system, rapidly clogging the nozzle and preventing further flow. Sustained flow could not be maintained.

The bicarbonate-hydrophobic silica formulation flowed continuously through the system for more than 65 hours at controllable rates varying from 0.4536 kg (1 pound) per minute to 2.268 kg (5 pounds) per minute. No flow problems were encountered therewith.

From the preceding disclosure, it will be seen that the present invention provides an improved process for cleaning or removing paint or other coatings from the surfaces of sensitive substrates, and to sodium bicarbonate-containing blasting media useful therein. Accordingly, the preceding description should be construed as illustrative and not in a limiting sense.

## Claims

1. A process for removing coatings from sensitive metal and composite surfaces, which comprises blasting said surfaces with a compressed air stream under pressures of 68.95-1034.22 kPa (10-150 psi), said stream containing as a blasting medium water-soluble bicarbonate particles selected from the group consisting of alkali metal and ammonium bicarbonates, **characterized in that** the process is carried out with a compressed air stream that is saturated with moisture, said bicarbonate particles having particle sizes within the range of 250-500 microns, in admixture with at least 0.2% of a hydrophobic silica flow/anti-caking agent, by weight of the bicarbonate.

2. The process of claim 1, wherein the bicarbonate is sodium bicarbonate, and the hydrophobic silica is substantially free of non-hydrogen bonded silanol groups and adsorbed water.

3. The process of claim 1 or 2, wherein the blast stream is applied to the surface treated at a rate of 0.4536-4.536 kg (1-10 pounds) of the sodium bicarbonate particles per minute.

4. The process of any one of the precedings claims, wherein the blast medium contains 0.2-3% of the hydrophobic silica, by weight of the bicarbonate.

5. The process of any one of the preceding claims, wherein the bicarbonate has particle sizes within the range of 250-300 microns.

6. A blasting medium for removing coatings from sensitive metal and composite surfaces, which consists essentially of water-soluble bicarbonate particles selected from the group consisting of alkali metal and ammonium bicarbonates, **characterized in that** said bicarbonate particles have particle sizes within the range of 250-500 microns, in admixture with at least 0.2% of a hydrophobic silica flow/anti-caking agent, by weight of the bicarbonate.

7. The blasting medium of claim 6, wherein the bicarbonate is sodium bicarbonate, and the hydrophobic silica is substantially free of non-hydrogen bonded silanol groups and adsorbed water.

8. The blasting medium of claim 6 or 7, wherein the blasting medium contains 0.2-3% of the hydrophobic silica.

9. The blasting medium of claim 6, 7 or 8, wherein the bicarbonate has particle sizes within the range of 250-300 microns.

## Patentansprüche

1. Verfahren zum Entfernen von Schichten von empfindlichen Metall- und Verbundoberflächen, welches das Strahlblasen dieser Oberflächen mit einem Druckluftstrom unter einem Druck von 68,95-1034,22 kPa (10-150 psi) aufweist, wobei der Druckluftstrom als Gebläsemittel wasserlösliche Bicarbonatteilchen enthält, **dadurch gekennzeichnet, daß** das Verfahren mittels eins mit Feuchtigkeit gesättigtem Druckluftstroms ausgeführt wird, wobei die Bicarbonatteilchen Teilchengrößen im Bereich von 250-500 Mikron haben, unter Beimischung von mindestens 0,2% einem hydrophobischen Kieselsäureströmungs- und antiverkrustungsmittel, pro Gewichtsbicarbonat.

2. Verfahren nach Anspruch 1, wobei das Bicarbonat Natriumbicarbonat ist, und die hydrophobische Kieselsäure im wesentlichen frei von nicht durch Wasserstoff gebundenen Silanolgruppen und von absorbiertem Wasser ist.

3. Verfahren nach Anspruch 1 oder 2, wobei ein Gebläsestrahl mit einer Geschwindigkeit von 0,4536-4,536 kg (1-10 lbs) der Natriumbicarbonatteilchen pro Minute auf die behandelte Oberfläche aufgebracht wird.

4. Verfahren nach einem der vorhergehenden Ansprüche, wobei das Gebläsemittel 0,2-3% der hydrophobischen Kieselsäure, pro Gewicht des Bicarbonats, enthält.

5. Verfahren nach einem der vorhergehenden Ansprüche, wobei das Bicarbonat Teilchengrößen im Bereich von 250-300 Mikron hat.

6. Gebläsemittel zum Entfernen von Schichten von empfindlichen Metall- und Verbundoberflächen, welches im wesentlichen aus wasserlöslichen Bicarbonatteilchen besteht, die aus der aus Alkalimetall- und Ammoniumbicarbonaten bestehenden Gruppe selektiert sind, **dadurch gekennzeichnet**, **daß** die Bicarbonatteilchen Teilchengrößen im Bereich von 250-500 Mikron haben, unter Beimischung von mindestens 0,2% einem hydrophobische Kieselsäureströmungs- und antiverkrustungsmittel pro Gewichtsbicarbonat.

7. Gebläsemittel nach Anspruch 6, wobei das Bicarbonat Natriumcarbonat ist, und die hydrophobische Kieselsäure im wesentlich frei von nicht durch Wasserstoff gebundenen Silanolgruppen und von absorbiertem Wasser ist.

8. Gebläsemittel nach Anspruch 6 oder 7, wobei das Gebläsemittel 0,2-3% der hydrophobischen Kieselsäure enthält.

9. Gebläsemittel nach Ansprüchen 6, 7 oder 8, wobei das Bicarbonat Teilchengrößen im Bereich von 250-300 Mikron hat.

## Revendications

1. Procédé d'élimination de revêtements sur des surfaces métalliques sensibles et surfaces composites sensibles qui comprend la projection de ces surfaces au moyen d'un courant d'air comprimé sous pression de 68,95 -1034,22 kPa (10-150 psi), ce courant contenant en tant qu'agent de projection des particules de bicarbonate hydrosolubles choisies dans le groupe constitué par des bicarbonates de métaux alcalins et d'ammonium, caractérisé en ce que le procédé s'effectue avec un courant d'air comprimé qui est saturé d'humidité, les particules de bicarbonate ayant des dimensions particulaires dans la plage de 250-500 microns, en addition avec au moins 0,2 % d'un flux agent/antiagglutinant de silice hydrophobe en poids du bicarbonate.

2. Procédé selon la revendication 1, dans lequel le bicarbonate est du bicarbonate de sodium et la silice hydrophobe est sensiblement exempte de groupes silanol liés non hydrogène et de l'eau adsorbée.

3. Procédé selon la revendication 1 ou 2, dans lequel le courant de projection est appliqué sur la surface traitée à raison de 0,4536-4,536 kg (1-10 livres) de particules de bicarbonate de sodium par minute.

4. Procédé selon l'une quelconque des revedications précédentes, dans lequel l'agent de projection contient 0,2-3 % de la silice hydrophobe en poids de biocarbonate.

5. Procédé selon l'une quelconque des revendications précédentes, dans lequel le bicarbonate présente des tailles particulaires dans la plage de 250-300 microns.

6. Agent de projection destiné à éliminer des revêtements sur des surfaces métalliques sensibles et surfaces composites sensibles, qui consiste sensiblement en des particules de bicarbonate hydrosolubles choisies dans le groupe constitué par des bicarbonates de métaux alcalins et d'ammonium, caractérisé en ce que les particules de bicarbonate ont des tailles particulaires dans la plage de 250-500 microns, en addition avec au moins 0,2 % d'un flux agent/anti-agglutinant de silice hydrophobe, en poids du bicarbonate.

7. Agent de projection selon la revendication 6, dans lequel le bicarbonate est du bicarbonate de sodium et la silice hydrophobe est sensiblement exempte de groupes silanol liés non hydrogène et de l'eau adsorbée.

8. Agent de projection selon la revendication 6 ou 7, dans lequel l'agent de projection contient 0,2-3 % de silice hydrophobe.

9. Agent de projection selon les revendications 6, 7 8, dans lequel le bicarbonate présente des tailles particulaires dans la plage de 250-300 microns.
